# EUROPEAN PATENT APPLICATION

(11) **EP 2 980 908 A1**
(43) Date of publication of application: **03.02.2016**
(21) Application number: 15157959.6
(22) Date of filing: 06.03.2015
(51) Int. Cl.: H01M 10/0525, H01M 10/0569, H01M 4/485, H01M 4/505, H01M 4/525, H01M 4/58, H01M 2/02

(54) **NONAQUEOUS ELECTROLYTE BATTERY AND BATTERY PACK**

(30) Priority: 31.07.2014 JP 2014156968
(71) Applicant: Kabushiki Kaisha Toshiba, Tokyo 105-8001 (JP)
(72) Inventor: Hoshina, Keigo, Tokyo, 105-8001 (JP); Kishi, Takashi, Tokyo, 105-8001 (JP); Matsuno, Shinsuke, Tokyo, 105-8001 (JP); Sasakawa, Tetsuya, Tokyo, 105-8001 (JP); Isozaki, Yoshiyuki, Tokyo, 105-8001 (JP); Takami, Norio, Tokyo, 105-8001 (JP); Saruwatari, Hidesato, Tokyo, 105-8001 (JP)
(74) Representative: Hoffmann Eitle

(57) **Abstract**

According to one embodiment, a nonaqueous electrolyte battery (20) that includes a positive electrode (5), a negative electrode (3), and a nonaqueous electrolyte is provided. The positive electrode (5) includes a positive electrode active material. The negative electrode (3) includes a negative electrode active material that absorbs and releases lithium at 0.4 V vs. Li/Li⁺ or higher. The nonaqueous electrolyte is dissolved in a nonaqueous solvent that includes γ-butyrolactones substituted by a hydrocarbon substituent at an alpha position.

## Description

### FIELD

Embodiments described herein relate generally to a nonaqueous electrolyte battery and a battery pack.

### BACKGROUND

Research on nonaqueous electrolyte batteries that are charged and discharged by movement of lithium ions between a negative electrode and a positive electrode, as high energy density batteries, is actively done.

In addition to the use as a power supply for small electronic devices, the nonaqueous electrolyte battery is expected to be used as a medium-to-large power supply for vehicles and stationary uses. In such medium-to-large uses, life characteristics and a high safety are demanded. In addition, charge and discharge characteristics in high-temperature and low-temperature environments are required.

For nonaqueous electrolytes used in nonaqueous electrolyte batteries excellent in life characteristics and charge and discharge characteristics in high-temperature and low-temperature environments, the following are required. In such nonaqueous electrolytes, oxidation and reduction decomposition should not occur continuously. Further, the boiling point of the nonaqueous electrolyte needs to be high. Finally, the melting point of the nonaqueous electrolyte needs to be low.

As a solvent for nonaqueous electrolytes having a high boiling point and a low melting point, cyclic carbonates, such as propylene carbonate, and cyclic esters can be cited.

### BRIEF DESCRIPTION OF THE DRAWINGS

FIG. 1 is a cross-sectional view of an exemplary flat nonaqueous electrolyte battery according to a first embodiment;
FIG. 2 is an enlarged cross-sectional view of part A in FIG. 1;
FIG. 3 is a partial cutout perspective view schematically showing another flat nonaqueous electrolyte battery according to the first embodiment;
FIG. 4 is an enlarged cross-sectional view of part B in FIG. 3;
FIG. 5 is an exploded perspective view of an exemplary battery pack according to a second embodiment; and
FIG. 6 is a block diagram showing an electric circuit of the battery pack in FIG. 5.

### DETAILED DESCRIPTION

According to one embodiment, a nonaqueous electrolyte battery that includes a positive electrode, a negative electrode, and a nonaqueous electrolyte is provided. The positive electrode includes a positive electrode active material. The negative electrode includes a negative electrode active material that absorbs and releases lithium at 0.4 V vs. Li/Li⁺ or higher. The nonaqueous electrolyte is dissolved in a nonaqueous solvent that includes γ-butyrolactones substituted by a hydrocarbon substituent at an alpha position.

### (First embodiment)

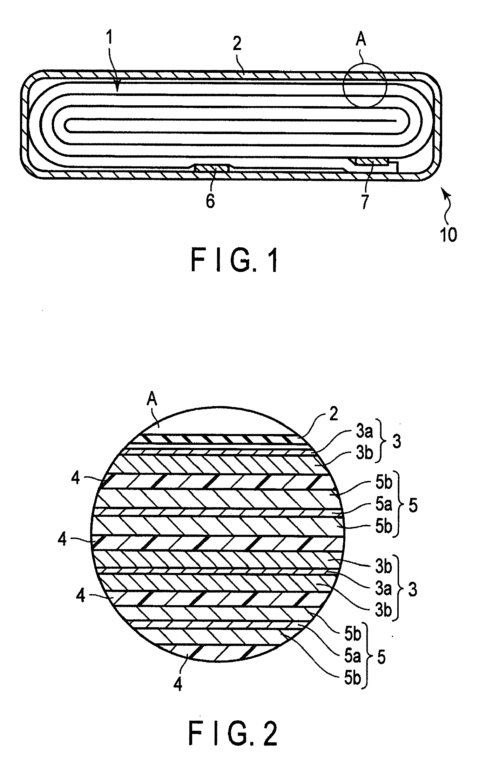

A nonaqueous electrolyte battery according to the first embodiment will be described more concretely, with reference to FIGS. 1 and 2.

FIG. 1 shows a cross-sectional view of a flat nonaqueous electrolyte battery 10 according to the first embodiment, and FIG. 2 shows an enlarged cross-sectional view of part A in FIG. 1. Each drawing is a typical view for description. Though there are parts different from an actual battery in shape, dimension, or ratio, these structural designs may be properly changed taking the following explanations and known technologies into consideration.

A flat wound electrode group 1 is housed in a bag-like container 2 made of a laminate film in which a metallic layer is interposed between two resin films. The flat wound electrode group 1 is formed by spirally winding and pressing a laminate, in which a negative electrode 3, a separator 4, a positive electrode 5, and another separator 4 are laminated in this order from the outer side. The negative electrode 3 in the outermost layer has a configuration, in which, as shown in FIG. 2, a negative electrode active material-including layer 3b including a negative electrode active material is formed on one inner side of a negative electrode current collector 3a. The other negative electrodes 3 are configured by forming the negative electrode active material-including layer 3b on both sides of the negative electrode current collector 3a. The positive electrode 5 is configured by forming a positive electrode active material-including layer 5b on both sides of a positive electrode current collector 5a.

Near an outer circumference of the wound electrode group 1, a negative electrode terminal 6 is electrically connected to the negative electrode current collector 3a of the negative electrode 3 in the outermost layer. Also, near the outer circumference of the wound electrode group 1, a positive electrode terminal 7 is electrically connected to the positive electrode current collector 5a of the positive electrode 5 on the inner side. The negative electrode terminal 6 and the positive electrode terminal 7 project out from an opening of the bag-like container 2. For example, a liquid nonaqueous electrolyte is injected through the opening of the bag-like container 2. The wound electrode group 1 and the liquid nonaqueous electrolyte are sealed by heat-sealing the opening in the bag-like container 2, sandwiching the negative electrode terminal 6 and the positive electrode terminal 7 in between.

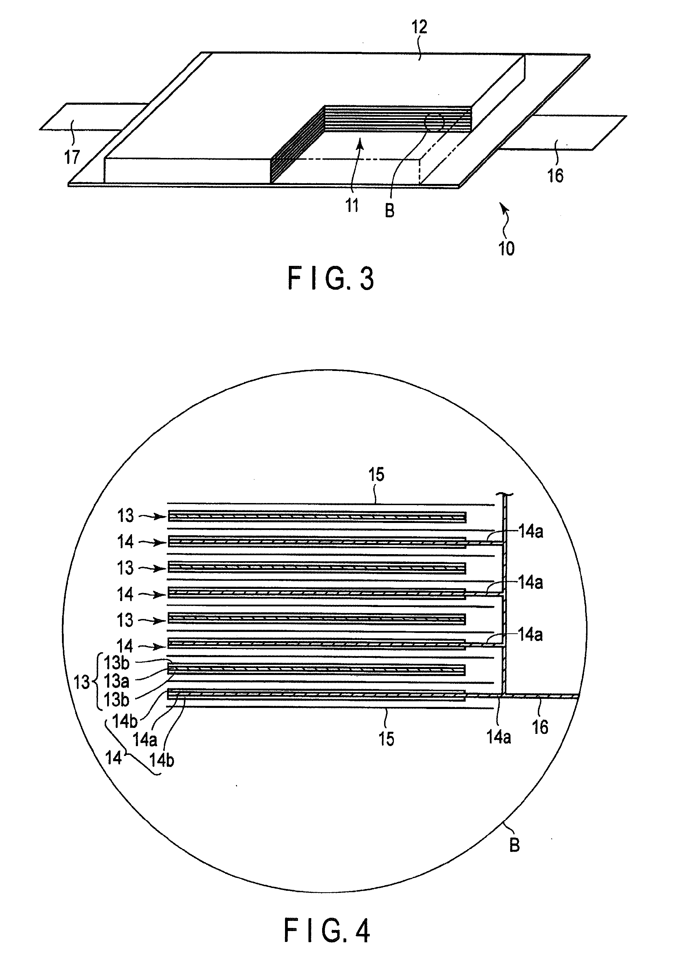

The nonaqueous electrolyte battery according to the first embodiment is not limited to the configuration shown in FIGS. 1 and 2 and may be configured, for example, as shown in FIGS. 3 and 4. FIG. 3 is a partial cutout perspective view schematically showing another flat nonaqueous electrolyte battery according to the first embodiment, and FIG. 4 is an enlarged sectional view of part B in FIG. 3.

A laminate electrode group 11 is housed in a container 12 made of a laminate film, in which a metallic layer is interposed between two resin films. The laminate electrode group 11 has, as shown in FIG. 4, a structure in which a positive electrode 13 and a negative electrode 14 are alternately laminated with a separator 15 interposed therebetween. A plurality of the positive electrodes 13 is present, and each of the plurality of positive electrodes includes a current collector 13a and a positive electrode active material-including layer 13b held on both surfaces of the current collector 13a. A plurality of the negative electrodes 14 is present, and each of the plurality of negative electrodes includes a current collector 14a and a negative electrode active material-including layer 14b held on both surfaces of the current collector 14a. One side of the current collector 14a of each of the negative electrodes 14 protrudes from the positive electrode 13. The protruding current collector 14a is electrically connected to a belt-like negative electrode terminal 16. One end of the belt-like negative electrode terminal 16 is drawn out of the container 12. Though not illustrated, one side of the current collector 13a, positioned opposite to the protruding side of the current collector 14a, protrudes from the negative electrode 14. The current collector 13a protruding from the negative electrode 14 is electrically connected to a belt-like positive electrode terminal 17. One end of the belt-like positive electrode terminal 17 is positioned on the opposite side of the negative electrode terminal 16. The one end of the belt-like positive electrode terminal 17 is drawn out of the container 12.

Hereinafter, the negative electrode, positive electrode, nonaqueous electrolyte, separator, container, positive electrode terminal, and negative electrode terminal used in a nonaqueous electrolyte battery in the present embodiment will be described in detail.

### (Negative electrode)

The negative electrode 3 includes the negative electrode current collector 3a and the negative electrode active material-including layer 3b. The negative electrode active material-including layer 3b includes a negative electrode active material, a conductive agent, and a binder. The negative electrode active material-including layer 3b is formed on one surface or both surfaces of the negative electrode current collector 3a.

The negative electrode active material-including layer 3b includes a negative electrode active material that absorbs and releases lithium at 0.4 V vs. Li/Li⁺ or higher. The reason for limiting the Li absorption potential of the active material to the above range will be described below. If input and output at large currents are repeated for an active material that absorbs lithium ions at a potential lower than 0.4 V(vs. Li/Li⁺) (examples of such active materials include graphite, lithium metal, and the like), metal lithium deposits onto the surface of the electrode, and the deposition grows dendritically. Thus, an internal short-circuit may occur during input and output at large currents. The deposition of metal lithium on the surface of the electrode can be inhibited by using an active material whose Li absorption potential is 0.4 V (vs. Li/Li⁺) or higher. As a result, an internal short-circuit during input and output at large currents can be avoided. Therefore, the Li absorption potential of the active material is preferably 0.4 V (vs. Li/Li⁺) or higher. The upper limit of the Li absorption potential of the active material is preferably 3 V (vs. Li/Li⁺). A particularly preferable range is 0.4 V (vs. Li/Li⁺) or higher and 2 V (vs. Li/Li⁺) or lower.

The active material capable of absorbing lithium ions at 0.4 V (vs. Li/Li⁺) or higher is preferably a metal oxide, a metal sulfide, a metal nitride, or an alloy. As such metal oxides, for example, titanium-containing metal composite oxides, tin-based oxides such as SnB_{0.4}P_{0.6}O_{3.1} and SnSiO₃, silicon-based oxides such as SiO, and tungsten-based oxides such as WO₃ can be cited. Among others, titanium-containing metal composite oxides are preferable.

As the titanium-containing metal composite oxide, for example, titanium-based oxides containing no lithium when the oxide is synthesized, lithium-titanium oxides, and lithium-titanium composite oxides in which a portion of elements constituting the lithium-titanium oxide is replaced with other elements can be cited. As the lithium-titanium oxide, for example, lithium titanates having a spinel structure (for example, Li₄₊ₓTi₅O₁₂ (x is a value that changes depending on states of charge and discharge, and 0 ≤ x ≤ 3)) and ramsdellite type lithium titanates (for example, Li_{2+y}Ti₃O₇ (y is a value that changes depending on states of charge and discharge, and 0 ≤ y ≤ 3)), can be cited.

As the titanium-based oxide, TiO₂ and metal composite oxides containing Ti and at least one element selected from a group consisting of V, Sn, Cu, Ni, Co, and Fe can be cited. For example, titanium composite oxides having a monoclinic crystal β-type structure, which is one of crystal structures of TiO₂, include TiO₂(B) and oxides obtained by replacing a portion constituting elements of TiO₂(B) with other elements (for example, Li).

A lithium titanate having a spinel structure is preferable as the negative electrode active material. In addition, orthorhombic crystal β-type titanium composite oxides, anatase type titanium composite oxides, ramsdellite type lithium titanates, and titanium-containing oxides such as TiNb₂O₇ and Ti₂Nb₂O₉ can be cited as the negative electrode active material. The negative electrode active material may contain a plurality of these titanium-containing oxides.

The active material has a form including primary particles or secondary particles in which primary particles are aggregated. That is, the active material may include single primary particles and secondary particles in which primary particles are aggregated. In the active material including secondary particles and single primary particles, it is desirable that the diameter of primary particles is 0.1 µm to 10 µm, while the diameter of secondary particles is 1 µm to 30 µm. By setting the diameter of primary particles and the diameter of secondary particles to the above ranges, degradation of the active material due to a reaction with the nonaqueous electrolyte can be inhibited. The more desirable range of the diameter of primary particles is 0.5 µm to 3 µm. The more desirable range of the diameter of secondary particles is 10 µm to 20 µm.

The diameter of primary particles and the diameter of secondary particles of the active material can be measured by a laser diffraction method. The mixing ratio of the negative electrode active material, the conductive agent, and the binder is preferably within the range of, 70% to 96% by weight of the negative electrode active material, 2% to 28% by weight of the conductive agent, and 2% to 28% by weight of the binder. If the amount of the conductive agent is less than 2% by weight, current collection performance of the negative electrode active material-including layer 3b may decrease, leading to degradation in large current characteristics of the nonaqueous electrolyte battery. If the amount of the binder is less than 2% by weight, binding between the negative electrode active material-including layer 3b and the negative electrode current collector 3a may become lowered, leading to degradation in cycle characteristics. On the other hand, the conductive agent and the binder are each preferably set to 28% or less by weight from the viewpoint of achieving a higher capacity.

The negative electrode current collector 3a is preferably formed from aluminum foil or aluminum alloy foil, which are electrochemically stable in the potential range higher than 0.4 V. The aluminum alloy foil may contain one or more of elements such as Mg, Ti, Zn, Mn, Fe, Cu, and Si.

The negative electrode 3 can be produced by, for example, the following method.

First, a slurry is prepared by suspending the negative electrode active material, the conductive agent, and the binder in a solvent. The slurry is applied to one surface or both surfaces of the negative electrode current collector 3a and dried. Then, the negative electrode active material-including layer 3b is formed by pressing the negative electrode current collector 3a, to which the slurry has been applied to produce the negative electrode 3. Alternatively, the negative electrode active material, the conductive agent, and the binder may be formed in a pellet shape, to form the negative electrode active material-including layer 3b. Then, the negative electrode 3 may be produced by forming the pellet-shaped negative electrode active material-including layer 3b onto the negative electrode current collector 3a.

### (Positive electrode)

The positive electrode 5 includes the positive electrode current collector 5a and the positive electrode active material-including layer 5b. The positive electrode active material-including layer 5b includes a positive electrode active material, a conductive agent, and a binder. The positive electrode active material-including layer 5b is formed on one surface or both surfaces of the positive electrode current collector 5a.

Examples of the positive electrode active material include manganese dioxide (MnO₂), iron oxide, nickel oxide, lithium-manganese composite oxide (for example, LiₓMn₂O₄ and LiₓMnO₂), lithium-nickel composite oxide (for example, LiₓNiO₂), lithium-cobalt composite oxide (for example, LiₓCoO₂), lithium-nickel-cobalt composite oxide (for example, LiNi_{1-y}Co_{y}O₂), lithium-manganese-cobalt composite oxide (for example, LiₓMn_{y}Co_{1-y}O₂), lithium-nickel-cobalt-manganese composite oxide (for example, LiNi_{1-y-z}Co_{y}Mn_{z}O₂), lithium-nickel-cobalt-aluminum composite oxide (for example, LiNi_{1-y-z}Co_{y}Al_{z}O₂), lithium-manganese-nickel composite oxide having a spinel structure (for example, LiₓMn_{2-y}Ni_{y}O₄), lithium phosphate having an olivine structure (for example, LiₓFePO₄, LiₓMnPO₄, LiₓMn_{1-y}Fe_{y}PO₄, and LiₓCoPO₄), iron sulfate (Fe₂(SO₄)₃), and vanadium oxide (for example, V₂O₅), that absorb lithium. It is preferable that 0 < x ≤ 1, 0 ≤ y ≤ 1, and 0 ≤ z ≤ 1 hold above. These compounds may be used alone or a plurality of compounds may be combined and used as the active material.

Among others, nickel oxide, lithium-manganese composite oxide (LiₓMn₂O₄), lithium-cobalt composite oxide (LiₓCoO₂), lithium-nickel-cobalt composite oxide (LiₓNi_{1-y}Co_{y}O₂), lithium-manganese-cobalt composite oxide (LiₓMn_{y}Co_{1-y}O₂), lithium-nickel-cobalt-manganese composite oxide (for example, LiNi_{1-y-z}Co_{y}Mn_{z}O₂), and lithium phosphate having an olivine structure (for LiₓFePO₄, LiₓMnPO₄, LiₓMn_{1-y}Fe_{y}PO₄, and LiₓCoPO₄) are preferable. It is preferable that 0 < x ≤ 1, o ≤ y ≤ 1, and 0 ≤ z ≤ 1 hold above.

Examples of the conductive agent include carbon substances such as acetylene black, carbon black, graphite, carbon nanofiber, and carbon nanotube. These carbon substances may be used alone or a plurality of carbon substances may be used.

The binder binds the active material, the conductive agent, and the current collector. Examples of the binder include polytetrafluoroethylene (PTFE), polyvinylidene difluoride (PVdF), fluororubber, acrylic resin, and cellulose such as carboxymethyl cellulose.

The sum of the positive electrode active material and lithium absorbing material, the conductive agent, and the binder in the positive electrode active material-including layer 5b are preferably mixed in amounts of 80% to 95% by weight, 3% to 18% by weight, and 2% to 17% by weight, respectively. By setting the amount of the conductive agent to 3% or more by weight, the conductive agent can achieve the above effect. By setting the amount of the conductive agent to 18% or less by weight, the decomposition of the nonaqueous electrolyte on the surface of the conductive agent during storage at high temperature can be reduced. By setting the amount of the binder to 2% or more by weight, the binder provides sufficient strength. By setting the amount of the binder to 17% or less by weight, the amount of the binder as an insulating material mixed in the positive electrode can be reduced, thereby reducing the internal resistance.

The positive electrode current collector 5a is preferably aluminum foil or aluminum alloy foil. The aluminum alloy foil may contain one or more of elements such as Mg, Ti, Zn, Mn, Fe, Cu, and Si.

The positive electrode 5 can be produced by, for example, the following method.

First, a slurry is prepared by suspending the positive electrode active material, the conductive agent, and the binder in a solvent. The slurry is applied to one surface or both surfaces of the positive electrode current collector 5a and dried. Then, the positive electrode active material-including layer 5b is formed by pressing the positive electrode current collector 5a, to which the slurry has been applied, to produce the positive electrode 5. Alternatively, the positive electrode active material, the conductive agent, and the binder may be formed in a pellet shape, to form the positive electrode active material-including layer 5b. Then, the positive electrode 5 may be produced by forming the pellet-shaped positive electrode active material-including layer 5b onto the positive electrode current collector 5a.

### (Nonaqueous electrolyte)

A nonaqueous solvent includes γ-butyrolactones substituted by a hydrocarbon substituent at the alpha position. By using the nonaqueous solvent, a nonaqueous electrolyte battery excellent in high-temperature characteristics and low-temperature characteristics can be obtained. The nonaqueous electrolyte is prepared by dissolving an electrolyte in the nonaqueous solvent. The concentration of the electrolyte is preferably in the range of 0.5 to 2.5 mol/l.

Examples of the electrolyte include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bis-trifluoromethylsulfonylimide [LiN(CF₃SO₂)₂]. These electrolytes can be used alone, or two or more electrolytes can be combined and used. The electrolyte preferably includes LiPF₆.

Examples of γ-butyrolactones substituted by a hydrocarbon substituent at the alpha position include α-methyl-γ-butyrolactone, α-ethyl-γ-butyrolactone, and α-propyl-γ-butyrolactone. Examples of other nonaqueous solvents that may be included in the nonaqueous solvent include cyclic carbonates such as propylene carbonate (PC), ethylene carbonate (EC), and vinylene carbonate, alkyl carbonates such as diethyl carbonate (DEC), dimethyl carbonate (DMC), and methyethyl carbonate (MEC), cyclic ethers such as tetrahydrofuran (THF), 2-methyl tetrahydrofuran (2MeTHF), and dioxolane (DOX), alkyl ethers such as dimethoxy-ethane (DME) and diethoethane (DEE), acetonitrile (AN), and sulfolane (SL). These nonaqueous solvents can be used alone or two or more nonaqueous solvents can be combined and used.

Examples of more desirable nonaqueous solvents include a mixed solvent, which includes a mixed solvent, in which at least two nonaqueous solvents from a group consisting of propylene carbonate (PC), ethylene carbonate (EC), diethyl carbonate (DEC), dimethyl carbonate (DMC), and methyethyl carbonate (MEC) are mixed, and γ-butyrolactone substituted by a hydrocarbon substituent at the alpha position. By using such a mixed solvent, a nonaqueous electrolyte battery excellent in high-temperature characteristics and low-temperature characteristics can be obtained. When such a mixed solvent is used, the amount of γ-butyrolactones substituted by a hydrocarbon substituent at the alpha position in the nonaqueous solvent is preferably 20% to 80% by weight.

### (Separator)

A porous film or a nonwoven fabric made of synthetic resin formed from a material such as polyethylene, polypropylene, cellulose, or polyvinylidene difluoride (PVdF) can be used as the separator 4. Among others, the porous film made of polyethylene or polypropylene melts at a fixed temperature and can shut off a current, and is therefore preferable from the viewpoint of safety.

### (Container)

A bag-like container made of laminate film or a container made of metal is used as the container 2.

A multi-layer film in which a metallic layer is interposed between resin films is used as a laminate film. The metallic layer is preferably aluminum foil or aluminum alloy foil, for the reduction of weight. As the resin film, for example, a polymeric material such as polypropylene (PP), polyethylene (PE), nylon, or polyethylene terephthalate (PET) can be used. The laminate film can be molded into a shape of a container by heat-sealing. The laminate film preferably has a thickness of 0.2 mm or less.

The container made of metal can be formed from aluminum or aluminum alloy. The aluminum alloy preferably includes one or more of elements such as magnesium, zinc, and silicon. On the other hand, the content of transition metals such as iron, copper, nickel, and chromium is preferably set to 100 ppm or less. Accordingly, long-term reliability in a high-temperature environment and heat dissipation properties can be improved dramatically. The container made of metal desirably has a thickness of 0.5 mm or less, and the container more desirably has a thickness of 0.2 mm or less.

Examples of the shape of a battery include a flat form, an angular form, a cylindrical form, a coin form, a button form, a sheet form, and a laminate form. Naturally, in addition to a small battery mounted in mobile electronic devices, the battery may be a large battery mounted on two-wheeled or four-wheeled vehicles.

### (Positive electrode terminal)

The positive electrode terminal 7 is formed from a material having an electrically stable potential in the range of 3.0 to 4.5 V vs. Li/Li⁺, and at the same time, having electrical conductivity. The positive electrode terminal 7 is preferably formed from aluminum or an aluminum alloy. The aluminum alloy may include one or more of elements such as Mg, Ti, Zn, Mn, Fe, Cu, and Si. The positive electrode terminal 7 is preferably formed from the same material as that of the positive electrode current collector 5a, to reduce the contact resistance with the positive electrode current collector 5a.

### (Negative electrode terminal)

The negative electrode terminal 6 is formed from a material having an electrically stable potential in the range of 0.4 to 3.0 V vs. Li/Li⁴, and at the same time, having electrical conductivity. The negative electrode terminal 6 is preferably formed from aluminum or an aluminum alloy. The aluminum alloy may include one or more of elements such as Mg, Ti, Zn, Mn, Fe, Cu, and Si. The negative electrode terminal 6 is preferably formed from the same material as that of the negative electrode current collector 3a, to reduce the contact resistance with the negative electrode current collector 3a.

### (Second embodiment)

Next, a battery pack according to one embodiment will be described in detail.

The battery pack according to the second embodiment includes one or more nonaqueous electrolyte batteries (that is, unit cells) according to the first embodiment. When a plurality of unit cells is contained in the battery pack, each unit cell is arranged, such that the unit cells are electrically connected in series, in parallel, or in series and in parallel.

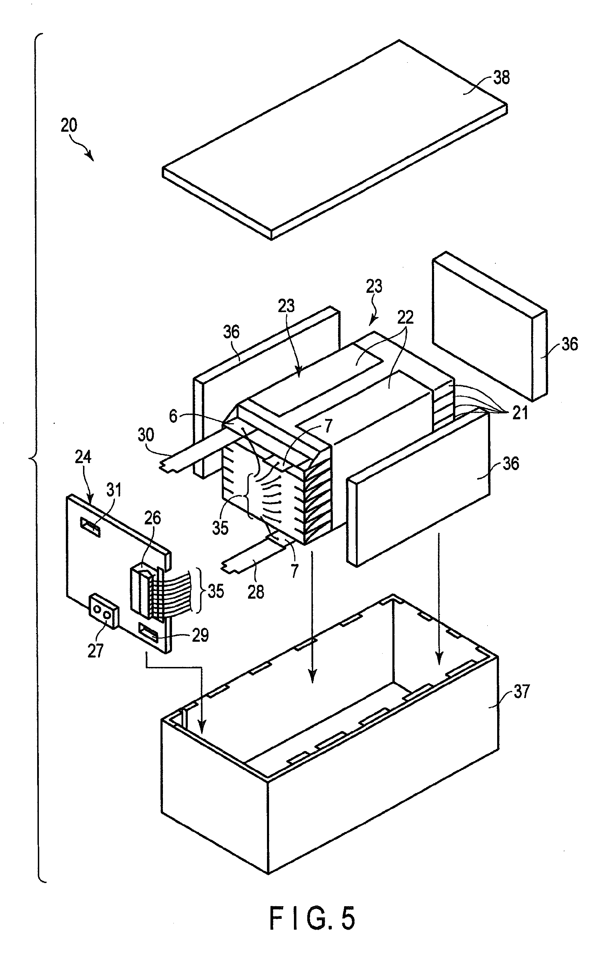

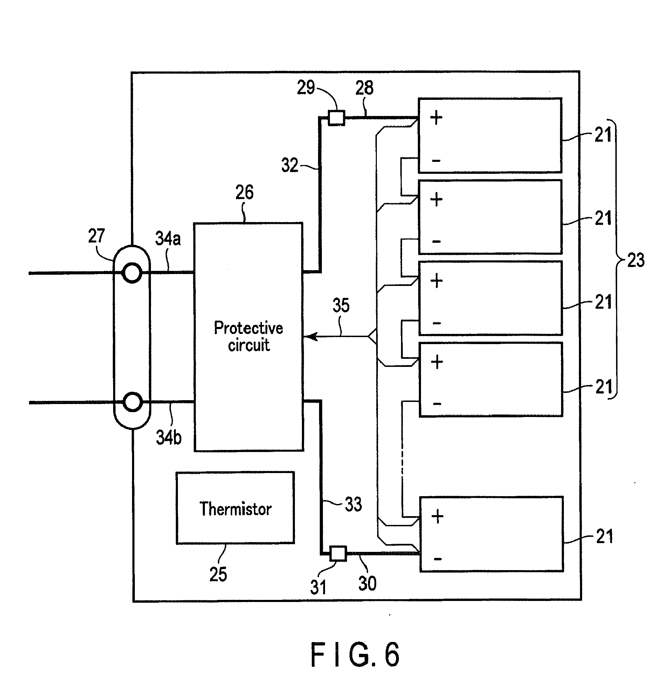

Such a battery pack will be described in detail with reference to FIGS. 5 and 6. A flat battery shown in FIGS. 1 and 3 can be used as a unit cell 21.

A plurality of the unit cells 21 is stacked such that the externally projected negative electrode terminal 6 and positive electrode terminal 7 are aligned in the same direction and fastened by an adhesive tape 22 to constitute a battery module 23. As shown in FIG. 6, these unit cells 21 are electrically connected in series to each other.

A printed wiring board 24 is arranged opposite to the side surface of the unit cells 21, from which the negative electrode terminal 6 and the positive electrode terminal 7 project. As shown in FIG. 6, a thermistor 25, a protective circuit 26, and a conducting terminal 27 that conducts electricity to external devices are mounted on the printed wiring board 24. Additionally, an electric insulating plate (not shown) is mounted on the surface of the printed wiring board 24 opposite to the battery module 23 to avoid unnecessary connection to wires of the battery module 23.

A positive electrode lead 28 is connected to the positive electrode terminal 7 positioned in the lowermost layer of the battery module 23. One end of the positive electrode lead 28 is inserted into a positive electrode connector 29 of the printed wiring board 24, and thereby electrically connecting the positive electrode lead 28 to the printed wiring board 24. A negative electrode lead 30 is connected to the negative electrode terminal 6 positioned in the uppermost layer of the battery module 23. One end of the negative electrode lead 30 is inserted into a negative electrode connector 31 of the printed wiring board 24, thereby electrically connecting the negative electrode lead 30 to the printed wiring board 24. The connectors 29 and 31 are connected to the protective circuit 26 via wires 32 and 33 formed on the printed wiring board 24.

The thermistor 25 detects the temperature of the unit cell 21. A detection signal of the thermistor 25 is sent to the protective circuit 26. The protective circuit 26 can disconnect a positive-side wire 34a and a negative-side wire 34b between the protective circuit 26 and the conducting terminal 27 under a predetermined condition. The predetermined condition is, for example, when the temperature detected by the thermistor 25 rises to a predetermined temperature or higher. Also, the predetermined condition is when an over-charge, an over-discharge, or an over-current of the unit cell 21 is detected. An over-charge or the like is detected for an individual unit cell 21 or all of the unit cells 21 as a whole. When an individual unit cell 21 is detected, the battery voltage may be detected, or the positive electrode potential or negative electrode potential may be detected. In the latter case, a lithium electrode used as a reference electrode is inserted into each of the individual unit cells 21. In the case of FIGS. 5 and 6, a wire 35 for voltage detection is connected to each of the unit cells 21. A detection signal is sent to the protective circuit 26 through these wires 35.

A protective sheet 36 made of rubber or resin is arranged on each of three side surfaces of the battery module 23 excluding the side surface from which the positive electrode terminal 7 and the negative electrode terminal 6 project.

The battery module 23 is housed in a housing container 37 together with each of the protective sheets 36 and the printed wiring board 24. That is, the protective sheet 36 is arranged on each of both inner side surfaces along a long-side direction and an inner side surface along a short-side direction of the housing container 37. In addition, the printed wiring board 24 is arranged on an inner side surface opposite to the protective sheet 36 that is arranged along the short-side direction. The battery module 23 is positioned in a space surrounded by the protective sheets 36 and the printed wiring board 24. A cover 38 is mounted on the top surface of the housing container 37.

Instead of the adhesive tape 22, a heat-shrinkage tape may be used to fix the battery module 23.

In this case, the protective sheet is arranged on both side surfaces of the battery module, and after the heat-shrinkage tape is wound around the battery module and protective sheets, the heat-shrinkage tape is allowed to heat-shrink to bind the battery module together.

While FIGS. 5 and 6 show an embodiment in which the unit cells 21 are connected in series, the unit cells may be connected in parallel or the connection in series and in parallel may be combined, to increase the battery capacity. In addition, assembled battery packs may further be connected in series or in parallel.

The form of the battery pack is appropriately changed in accordance with its use. The use is preferably one in which favorable cycle characteristics are desired along with large current characteristics. More specifically, uses of the battery pack are for vehicles such as two-wheeled and four-wheeled hybrid electric cars, two-wheeled and four-wheeled electric cars, and assisted bicycles. Particularly, the battery pack is suitably used for vehicles.

### [Examples]

Examples will be described below, but the present invention is not limited to the examples described below, so long as the present invention does not deviate from the scope and spirit thereof.

### (Example 1)

### Production of a positive electrode

First, LiNi_{0.33}CO_{0.33}Mn_{0.33}O₂ as the positive electrode active material (90wt%), acetylene black as the conductive agent (5wt%), and polyvinylidene difluoride (PVdF) as the binder (5wt%), were added to N-methylpyrolidone (NMP) and mixed to prepare a slurry. The slurry was applied to both sides of a current collector made of aluminum foil having a thickness of 15 µm and dried. By pressing the current collector, to which the slurry had been applied, a positive electrode having an electrode density of 3.2 g/cm³ was produced. The weight of the positive electrode was adjusted to be 1.1 times the weight of the negative electrode.

### Production of a negative electrode

A powder of spinel type titanium oxide (90wt%), acetylene black (5wt%), and polyvinylidene difluoride (PVdF) (5wt%), were added to N-methylpyrolidone (NMP) and mixed to prepare a slurry. The slurry was applied to both sides of a current collector made of aluminum foil having a thickness of 15 µm and dried. Then, by pressing the current collector, to which the slurry had been applied, a negative electrode having an electrode density of 2.0 g/cm³ was produced.

### Production of an electrode group

The positive electrode, a separator made of a polyethylene porous film having a thickness of 25 µm, the negative electrode, and the separator were laminated in this order. Then, the laminate was spirally wound. The wound laminate was hot-pressed at 90°C to produce a flat electrode group having a width of 30 mm and a thickness of 3.0 mm. The obtained electrode group was housed in a pack made of laminate film and dried at 80°C for 24 hours.

The laminate film had a configuration in which a polypropylene layer had been formed on both sides of aluminum foil having a thickness of 40 µm, the overall thickness thereof being 0.1 mm.

### Preparation of a nonaqueous electrolyte

Propylene carbonate (PC) and α-methyl-γ-butyrolactone (AM-GBL) were mixed in a volume ratio of 1 : 2 to prepare a mixed solvent. 1 M of LiPF₆ as an electrolyte was dissolved in the mixed solvent to prepare a liquid nonaqueous electrolyte.

### Manufacture of a nonaqueous electrolyte battery

A liquid nonaqueous electrolyte was injected into the laminate film pack housing the electrode group. Then, the pack was sealed by heat-sealing the pack to manufacture a nonaqueous electrolyte battery having the structure shown in FIG. 1 with a width of 35 mm, a thickness of 3.2 mm, and a height of 65 mm.

### (Example 2)

Same as Example 1 except that AM-GBL in Example 1 was changed to α-ethyl-γ-butyrolactone (AE-GBL).

### (Example 3)

Same as Example 1 except that AM-GBL in Example 1 was changed to α-propyl-γ-butyrolactone (AP-GBL).

### (Example 4)

Same as Example 1 except that the positive electrode active material, LiNi_{0.33}Co_{0.33}Mn_{0.33}O₂, in Example 1 was changed to LiNi_{0.4}Co_{0.4}Mn_{0.2}O₂.

### (Example 5)

Same as Example 1 except that the positive electrode active material, LiNi_{0.33}Co_{0.33}Mn_{0.33}O₂, in Example 1 was changed to LiNi_{0.4}Co_{0.2}Mn_{0.4}O₂.

### (Example 6)

Same as Example 1 except that the positive electrode active material, LiNi_{0.33}Co_{0.33}Mn_{0.33}O₂, in Example 1 was changed to LiNi_{0.5}Co_{0.2}Mn_{0.3}O₂.

### (Example 7)

Same as Example 1 except that the positive electrode active material, LiNi_{0.33}Co_{0.33}Mn_{0.33}O₂, in Example 1 was changed to LiNi_{0.6}Co_{0.2}Mn_{0.2}O₂.

### (Example 8)

Same as Example 1 except that the positive electrode active material, LiNi_{0.33}Co_{0.33}Mn_{0.33}O₂, in Example 1 was changed to LiNi_{0.8}Co_{0.1}Mn_{0.1}O₂.

### (Example 9)

Same as Example 1 except that the weight of the positive electrode was adjusted to be 1.2 times the weight of the negative electrode.

### (Example 10)

Same as Example 1 except that the weight of the positive electrode was adjusted to be 1.3 times the weight of the negative electrode.

### (Example 11)

Same as Example 1 except that the weight of the positive electrode was adjusted to be 1.4 times the weight of the negative electrode.

### (Example 12)

Same as Example 1 except that the weight of the positive electrode was adjusted to be 1.5 times the weight of the negative electrode.

### (Example 13)

Same as Example 1 except that the weight of the positive electrode was adjusted to be 1.6 times the weight of the negative electrode.

### (Example 14)

Same as Example 1 except that the weight of the positive electrode was adjusted to be 1.8 times the weight of the negative electrode.

### (Example 15)

Same as Example 1 except that adjustments were made so that the volume ratio of PC and AM-GBL would be 1 : 4.

### (Example 16)

Same as Example 1 except that adjustments were made so that the volume ratio of PC and AM-GBL would be 1 : 1.

### (Example 17)

Same as Example 1 except that adjustments were made so that the volume ratio of PC and AM-GBL would be 4 : 1.

### (Comparative Example 1)

Same as Example 1 except that AM-GBL in Example 1 was changed to γ-butyrolactone (GBL), which is not substituted by a hydrocarbon substituent at the alpha position.

### (Comparative Example 2)

Same as Example 1 except that AM-GBL in Example 1 was changed to α,α-dimethyl-γ-butyrolactone (AADM-GBL), which is substituted by two hydrocarbon substituents at the alpha position.

### (Comparative Example 3)

Same as Comparative Example 1 except that the electrolyte LiPF₆ was changed to LiBF₄.

### (Comparative Example 4)

Same as Example 1 except that the negative electrode active material, spinel type titanium oxide, in Example 1 was changed to graphite, and the weight of the positive electrode was adjusted to be 0.7 times the weight of the negative electrode.

### (Comparative Example 5)

Same as Comparative Example 4 except that PC in Comparative Example 4 was changed to ethylene carbonate.

### (Comparative Example 6)

Same as Comparative Example 5 except that 5 vol% of vinylene carbonate (VC) was added to the electrolyte in Comparative Example 5.

Examples 1 to 17 and Comparative Examples 1 to 6 are shown in Table 1.

**[Table 1]**

| | Positive Electrode | Negative Electrode | Weight of Positive Electrode Relative to Weight of Negative Electrode | Nonaqueous Solvent | Electrolyte |
|---|---|---|---|---|---|
| Example 1 | LiNi_{0.33}Co_{0.33}Mn_{0.33}O₂ | Li₄Ti₅O₁₂ | 1.1 times | PC:AM-GBL=1:2 | 1 M LiPF₆ |
| Example 2 | LiNi_{0.33}Co_{0.33}Mn_{0.33}O₂ | Li₄Ti₅O₁₂ | 1.1 times | PC:AE-GBL=1:2 | 1 M LiPF₆ |
| Example 3 | LiNi_{0.33}Co_{0.33}Mn_{0.33}O₂ | Li₄Ti₅O₁₂ | 1.1 times | PC:AP-GBL=1:2 | 1 M LiPF₆ |
| Example 4 | LiNi_{0.4}Co_{0.4}Mn_{0.2}O₂ | Li₄Ti₅O₁₂ | 1.1 times | PC:AM-GBL=1:2 | 1 M LiPF₆ |
| Example 5 | LiNi_{0.4}Co_{0.2}Mn_{0.4}O₂ | Li₄Ti₅O₁₂ | 1.1 times | PC:AM-GBL=1:2 | 1 M LiPF₆ |
| Example 6 | LiNi_{0.5}Co_{0.2}Mn_{0.3}O₂ | Li₄Ti₅O₁₂ | 1.1 times | PC:AM-GBL=1:2 | 1 M LiPF₆ |
| Example 7 | LiNi_{0.6}Co_{0.2}Mn_{0.2}O₂ | Li₄Ti₅O₁₂ | 1.1 times | PC:AM-GBL=1:2 | 1 M LiPF₆ |
| Example 8 | LiNi_{0.8}Co_{0.1}Mn_{0.1}O₂ | Li₄Ti₅O₁₂ | 1.1 times | PC:AM-GBL=1:2 | 1 M LiPF₆ |
| Example 9 | LiNi_{0.33}Co_{0.33}Mn_{0.33}O₂ | Li₄Ti₅O₁₂ | 1.2 times | PC:AM-GBL=1:2 | 1 M LiPF₆ |
| Example 10 | LiNi_{0.33}Co_{0.33}Mn_{0.33}O₂ | Li₄Ti₅O₁₂ | 1.3 times | PC:AM-GBL=1:2 | 1 M LiPF₆ |
| Example 11 | LiNi_{0.33}Co_{0.33}Mn_{0.33}O₂ | Li₄Ti₅O₁₂ | 1.4 times | PC:AM-GBL=1:2 | 1 M LiPF₆ |
| Example 12 | LiNi_{0.33}Co_{0.33}Mn_{0.33}O₂ | Li₄Ti₅O₁₂ | 1.5 times | PC:AM-GBL=1:2 | 1 M LiPF₉ |
| Example 13 | LiNi_{0.33}Co_{0.33}Mn_{0.33}O₂ | Li₄Ti₅O₁₂ | 1.6 times | PC:AM-GBL=1:2 | 1 M LiPF₆ |
| Example 14 | LiNi_{0.33}Co_{0.33}Mn_{0.33}O₂ | Li₄Ti₅O₁₂ | 1.8 times | PC:AM-GBL=1:2 | 1 M LiPF₆ |
| Example 15 | LiNi_{0.33}Co_{0.33}Mn_{0.33}O₂ | Li₄Ti₅O₁₂ | 1.1 times | PC:AM-GBL=1:4 | 1 M LiPF₆ |
| Example 16 | LiNi_{0.33}Co_{0.33}Mn_{0.33}O₂ | Li₄Ti₅O₁₂ | 1.1 times | PC:AM-GBL=1:1 | 1 M LiPF₆ |
| Example 17 | LiNi_{0.33}Co_{0.33}Mn_{0.33}O₂ | Li₄Ti₅O₁₂ | 1.1 times | PC:AM-GBL=4:1 | 1 M LiPF₆ |
| Comparative Example 1 | LiNi_{0.33}Co_{0.33}Mn_{0.33}O₂ | Li₄Ti₅O₁₂ | 1.1 times | PC:GBL=1:2 | 1 M LiPF₆ |
| Comparative Example 2 | LiNi_{0.33}Co_{0.33}Mn_{0.33}O₂ | Li₄Ti₅O₁₂ | 1.1 times | PC:AADM-GBL=1:2 | 1 M LiPF₆ |
| Comparative Example 3 | LiNi_{0.33}Co_{0.33}Mn_{0.33}O₃ | Li₄Ti₅O₁₂ | 1.1 times | PC:GBL=1:2 | 1 M LiBF₄ |
| Comparative Example 4 | LiNi_{0.33}Co_{0.33}Mn_{0.33}O₂ | graphite | 0.7 times | PC:AM-GBL=1:2 | 1 M LiPF₆ |
| Comparative Example 5 | LiNi_{0.33}Co_{0.33}Mn_{0.33}O₂ | graphite | 0.7 times | EC:AM-GBL=1:2 | 1 M LiPF₆ |
| Comparative Example 6 | LiNi_{0.33}Co_{0.33}Mn_{0.33}O₂ | graphite | 0.7 times | EC:AM-GBL=1:2, VC 5 vol% | 1 M LiPF₆ |

Charge and discharge test

Charge and discharge tests were performed in a 60°C environment using the produced cells to evaluate high-temperature characteristics. The charge and discharge cycles were performed in the range shown in Table 2. The charge and discharge rate was set to 1 C. The capacity retention ratio after 200 cycles is also shown in Table 2.

A 1 C discharge test was performed at -10°C and 25°C and capacities at respective temperatures were compared to evaluate low-temperature characteristics. The ratio of the capacity at -10°C to the capacity at 25°C is shown in Table 2.

**[Table 2]**

| | Range of Charge and Discharge | Capacity Retention Ratio after 200 Cycles at 60°C | Ratio of Capacity at -10°C to Capacity at 25°C |
|---|---|---|---|
| Example 1 | 1.8-2.8 V | 85% | 71% |
| Example 2 | 1.8-2.8 V | 81% | 68% |
| Example 3 | 1.8-2.8 V | 80% | 66% |
| Example 4 | 1.8-2.8 V | 80% | 70% |
| Example 5 | 1.8-2.8 V | 81% | 71% |
| Example 6 | 1.8-2.8 V | 82% | 72% |
| Example 7 | 1.8-2.8 V | 79% | 65% |
| Example 8 | 1.8-2.8 V | 77% | 66% |
| Example 9 | 1.8-2.65 V | 88% | 70% |
| Example 10 | 1.8-2.65 V | 88% | 71% |
| Example 11 | 1.8-2.55 V | 91% | 75% |
| Example 12 | 1.8-2.55 V | 92% | 74% |
| Example 13 | 1.8-2.6 V | 94% | 78% |
| Example 14 | 1.8-2.5 V | 94% | 77% |
| Example 15 | 1.8-2.8 V | 86% | 72% |
| Example 16 | 1.8-2.8 V | 83% | 69% |
| Example 17 | 1.8-2.8 V | 82% | 68% |
| Comparative Example 1 | 1.8-2.8 V | 59% | 47% |
| Comparative Example 2 | 1.8-2.8 V | 69% | 66% |
| Comparative Example 3 | 1.8-2.8 V | 72% | 58% |
| Comparative Example 4 | 2.5-4.2 V | 49% | 50% |
| Comparative Example 5 | 2.5-4.2 V | 70% | 55% |
| Comparative Example 6 | 2.5-4.2 V | 72% | 57% |

It is clear from results of Examples 1 to 3 and Comparative Examples 1 to 3 that compared with a case when GBL, which is not substituted by a hydrocarbon substituent at the alpha position, is used or AADM-GBL, which is substituted by two hydrocarbon substituents at the alpha position, is used, good high-temperature characteristics and low-temperature characteristics can be obtained when AM-GBL, AE-GBL, or AP-GBL is used.

Further, it is clear from Examples 4 to 8 that a similar effect can be achieved by changing the ratio of nickel, cobalt, or manganese in the positive electrode active material, lithium-nickel-cobalt-manganese composite oxide. It is also clear from Examples 9 to 14 that a similar effect can be achieved by changing the weight of the positive electrode with respect to the negative electrode. It is also clear from Examples 15 to 17 that a similar effect can be achieved by changing the ratio of AM-GBL, which is substituted by a hydrocarbon substituent at the alpha position, in the electrolyte.

It is clear from Comparative Examples 4 to 6 that compared with a case when titanium oxide, which is a material that absorbs and releases lithium at 0.4 V vs. Li/Li⁺ or higher, is used, high-temperature characteristics and low-temperature characteristics are inferior when graphite, which absorbs and releases lithium at a potential lower than 0.4 V vs. Li/Li⁺, is used as the negative electrode active material.

### (Example 18)

Same as Example 1 except that the positive electrode active material, LiNi_{0.33}Co_{0.33}Mn_{0.33}O₂, in Example 1 was changed to LiCoO₂.

### (Example 19)

Same as Example 1 except that the positive electrode active material, LiNi_{0.33}Co_{0.33}Mn_{0.33}O₂, in Example 1 was changed to LiFePO₄.

### (Example 20)

Same as Example 1 except that the positive electrode active material, LiNi_{0.33}Co_{0.33}Mn_{0.33}O₂, in Example 1 was changed to LiFe_{0.8}Mn_{0.2}PO₄.

### (Example 21)

Same as Example 1 except that the positive electrode active material, LiNi_{0.33}Co_{0.33}Mn_{0.33}O₂, in Example 1 was changed to LiFe_{0.2}Mn_{0.8}PO₄.

### (Example 22)

Same as Example 1 except that the positive electrode active material, LiNi_{0.33}Co_{0.33}Mn_{0.33}O₂, in Example 1 was changed to LiFe_{0.1}Mn_{0.8}Mg_{0.1}PO₄.

### (Example 23)

Same as Example 1 except that the positive electrode active material, LiNi_{0.33}Co_{0.33}Mn_{0.33}O₂, in Example 1 was changed to LiFe_{0.1}Mn_{0.8}Ti_{0.1}PO₄

### (Example 24)

Same as Example 1 except that the positive electrode active material, LiNi_{0.33}Co_{0.33}Mn_{0.33}O₂, in Example 1 was changed to LiMn₂O₄.

### (Example 25)

Same as Example 1 except that the positive electrode active material, LiNi_{0.33}Co_{0.33}Mn_{0.33}O₂, in Example 1 was changed to Li_{1.05}Mn_{1.9}Al_{0.05}O₄.

### (Example 26)

Same as Example 1 except that the positive electrode active material, LiNi_{0.33}Co_{0.33}Mn_{0.33}O₂, in Example 1 was changed to LiMn_{1.9}Co_{0.1}O₄.

### (Example 27)

Same as Example 1 except that the positive electrode active material, LiNi_{0.33}Co_{0.33}Mn_{0.33}O₂, in Example 1 was changed to Li_{1.1}Mn_{1.9}O₄.

### (Example 28)

Same as Example 19 except that the negative electrode active material was changed to Li₂Ti₃O₇ and the weight of the positive electrode was adjusted to be 1.2 times the weight of the negative electrode.

### (Example 29)

Same as Example 28 except that the negative electrode active material in Example 28 was changed to Nb₂TiO₇.

### (Example 30)

Same as Example 28 except that the negative electrode active material in Example 28 was changed to Nb₂Ti₂O₉.

### (Example 31)

Same as Example 28 except that the negative electrode active material in Example 28 was changed to Nb₁₀Ti₂O₂₉.

### (Example 32)

Same as Example 28 except that the negative electrode active material in Example 28 was changed to monoclinic crystal Nb₂O₅(Nb₂O₅(M)).

### (Example 33)

Same as Example 28 except that the negative electrode active material in Example 28 was changed to monoclinic crystal Nb₁₂O₂₉.

### (Example 34)

Same as Example 28 except that the negative electrode active material in Example 28 was changed to β-type monoclinic crystal TiO₂(TiO₂(B)).

### (Example 35)

Same as Example 28 except that the negative electrode active material in Example 28 was changed to anatase type TiO₂(TiO₂(A)).

### (Example 36)

Same as Example 28 except that the negative electrode active material in Example 28 was changed to a mixture of Li₄Ti₅O₁₂ and TiO₂(B) in a weight ratio of 1 : 1.

### (Example 37)

Same as Example 28 except that the negative electrode active material in Example 28 was changed to a mixture of Li₄Ti₅O₁₂ and Nb₂TiO₇ in a weight ratio of 1 : 1.

### (Example 38)

Same as Example 37 except that the positive electrode active material in Example 37 was changed to LiFe_{0.2}Mn_{0.8}PO₄.

### (Example 39)

Same as Example 37 except that the positive electrode active material in Example 37 was changed to Li_{1.05}Mn_{1.9}Al_{0.05}O₄.

### (Example 40)

Same as Example 37 except that the positive electrode active material in Example 37 was changed to LiNi_{0.8}Co_{0.1}Mn_{0.1}O₂.

### (Example 41)

Same as Example 37 except that the positive electrode active material in Example 1 was changed to a mixture of LiNi_{0.33}CO_{0.33}Mn_{0.33}O₂ and LiCoO₂ in a weight ratio of 1 : 1.

### (Example 42)

Same as Example 37 except that the positive electrode active material in Example 1 was changed to a mixture of LiNi_{0.33}Co_{0.33}Mn_{0.33}O₂ and LiFePO₄ in a weight ratio of 1 : 1.

### (Example 43)

Same as Example 37 except that the positive electrode active material in Example 1 was changed to a mixture of LiFe_{0.2}Mn_{0.8}PO₄ and LiCoO₂ in a weight ratio of 1 : 1.

Examples 18 to 43 are shown in Table 3. Further, high-temperature characteristics and low-temperature characteristics are shown in Table 4.

**[Table 3]**

| | Positive Electrode | Negative Electrode | Weight of Positive Electrode Relative to Weight of Negative Electrode | Nonaqueous Solvent | Electrolyte |
|---|---|---|---|---|---|
| Example 18 | LiCoO₂ | Li₄Ti₅O₁₂ | 1.1 times | PC:AM-GBL=1:2 | 1 M LiPF₆ |
| Example 19 | LiFePO₄ | Li₄Ti₅O₁₂ | 1.1 times | PC:AM-GBL=1:2 | 1 M LiPF₆ |
| Example 20 | LiFe_{0.8}Mn_{0.2}PO₄ | Li₄Ti₅O₁₂ | 1.1 times | PC:AM-GBL=1:2 | 1 M LiPF₆ |
| Example 21 | LiFe_{0.2}Mn_{0.8}PO₄ | Li₄Ti₅O₁₂ | 1.1 times | PC:AM-GBL=1:2 | 1 M LiPF₆ |
| Example 22 | LiFe_{0.1}Mn_{0.8}Mg_{0.1}PO₄ | Li₄Ti₅O₁₂ | 1.1 times | PC:AM-GBL=1:2 | 1 M LiPF₆ |
| Example 23 | LiFe_{0.1}Mn_{0.8}Ti_{0.1}PO₄ | Li₄Ti₅O₁₂ | 1.1 times | PC:AM-GBL=1:2 | 1 M LiPF₆ |
| Example 24 | LiMn₂O₄ | Li₄Ti₅O₁₂ | 1.7 times | PC:AM-GBL=1:2 | 1 M LiPF₆ |
| Example 25 | Li_{1.05}Mn_{1.8}Al_{0.05}O₄ | Li₄Ti₅O₁₂ | 1.7 times | PC:AM-GBL=1:2 | 1 M LiPF₆ |
| Example 26 | LiMn_{1.9}Co_{0.1}O₄ | Li₄Ti₅O₁₂ | 1.7 times | PC:AM-GBL=1:2 | 1 M LiPF₆ |
| Example 27 | Li_{1.1}Mn_{1.9}O₄ | Li₄Ti₅O₁₂ | 1.7 times | PC:AM-GBL=1:2 | 1 M LiPF₆ |
| Example 28 | LiFePO₄ | Li₂Ti₃O₇ | 1.2 times | PC:AM-GBL=1:2 | 1 M LiPF₆ |
| Example 29 | LiFePO₄ | Nb₂TiO₇ | 1.2 times | PC:AM-GBL=1:2 | 1 M LiPF₆ |
| Example 30 | LiFePO₄ | Nb₂Ti₂O₈ | 1.2 times | PC:AM-GBL=1:2 | 1 M LiPF₆ |
| Example 31 | LiFePO₄ | Nb₁₀Ti₂O₂₉ | 1.2 times | PC:AM-GBL=1:2 | 1 M LiPF₆ |
| Example 32 | LiFePO₄ | Nb₂O₅(M) | 1.2 times | PC:AM-GBL=1:2 | 1 M LiPF₆ |
| Example 33 | LiFePO₄ | Nb₁₂O₂₉ | 1.2 times | PC:AM-GBL=1:2 | 1 M LiPF₆ |
| Example 34 | LiFePO₄ | TiO₂(B) | 1.2 times | PC:AM-GBL=1:2 | 1 M LiPF₆ |
| Example 35 | LiFePO₄ | TiO₂(A) | 1.2 times | PC:AM-GBL=1:2 | 1 M LiPF₆ |
| Example 36 | LiFePO₄ | Li₄Ti₅O₁₂:TiO₂(B)=1:1 | 1.2 times | PC:AM-GBL=1:2 | 1 M LiPF₆ |
| Example 37 | LiFePO₄ | Li₄Ti₅O₁₂:Nb₂TiO₇=1:1 | 1.2 times | PC:AM-GBL=1:2 | 1 M LiPF₆ |
| Example 38 | LiFe_{0.2}Mn_{0.8}PO₄ | Li₄Ti₅O₁₂:Nb₂TiO₇=1:1 | 1.2 times | PC:AM-GBL=1:2 | 1 M LiPF₆ |
| Example 39 | Li_{1.05}Mn_{1.9}Al_{0.05}O₄ | Li₄Ti₅O₁₂:Nb₂TiO₇=1:1 | 1.7 times | PC:AM-GBL=1:2 | 1 M LiPF₆ |
| Example 40 | LiNi_{0.8}Co_{0.1}Mn_{0.1}O₂ | Li₄Ti₅O₁₂:Nb₂TiO₇=1:1 | 1.2 times | PC:AM-GBL**=**1:2 | 1 M LiPF₆ |
| Example 41 | LiNi_{0.33}Co_{0.33}Mn_{0.33}O₂:LiCoO₂=1:1 | Li₄Ti₅O₁₂ | 1.1 times | PC:AM-GBL=1:2 | 1 M LiPF₆ |
| Example 42 | LiNi_{0.33}Co_{0.33}Mn_{0.33}O₂:LiFePO₄=1:1 | Li₄Ti₅O₁₂ | 1.1 times | PC:AM-GBL=1:2 | 1 M LiPF₆ |
| Example 43 | LiFe_{0.2}Mn_{0.8}PO₄:LiCoO₂=1:1 | Li₄Ti₅O₁₂ | 1.1 times | PC:AM-GBL=1:2 | 1 M LiPF₆ |

**[Table 4]**

| | Range of Charge and Discharge | Capacity Retention Ratio after 200 Cycles at 60°C | Ratio of Capacity at -10°C to Capacity at 25°C |
|---|---|---|---|
| Example 18 | 1.8-2.8 V | 80% | 82% |
| Example 19 | 1.2-2.2 V | 97% | 75% |
| Example 20 | 1.2-2.2 V | 96% | 77% |
| Example 21 | 1.5-2.7 V | 78% | 62% |
| Example 22 | 1.5-2.7 V | 84% | 66% |
| Example 23 | 1.5-2.7 V | 81% | 63% |
| Example 24 | 1.5-2.7 V | 70% | 75% |
| Example 25 | 1.5-2.7 V | 77% | 77% |
| Example 26 | 1.5-2.7 V | 75% | 77% |
| Example 27 | 1.5-2.7 V | 74% | 72% |
| Example 28 | 1.2-2.2 V | 71% | 67% |
| Example 29 | 1.2-2.2 V | 83% | 72% |
| Example 30 | 1.2-2.2 V | 79% | 71% |
| Example 31 | 1.2-2.2 V | 77% | 68% |
| Example 32 | 1.2-2.2 V | 71% | 70% |
| Example 33 | 1.2-2.2 V | 84% | 73% |
| Example 34 | 1.2-2.2 V | 88% | 73% |
| Example 35 | 1.2-2.0 V | 73% | 65% |
| Example 36 | 1.2-2.2 V | 91% | 73% |
| Example 37 | 1.2-2.2 V | 88% | 73% |
| Example 38 | 1.5-2.7 V | 75% | 60% |
| Example 39 | 1.5-2.7 V | 72% | 73% |
| Example 40 | 1.8-2.8 V | 74% | 66% |
| Example 41 | 1.5-2.7 V | 82% | 77% |
| Example 42 | 1.5-2.7 V | 87% | 75% |
| Example 43 | 1.5-2.7 V | 77% | 73% |

It is clear from Examples 18 to 27 that a similar effect can be achieved by changing the positive electrode active material to LiCoO₂, LiFePO₄ or LiFe_{0.2}Mn_{0.8}PO₄ having an olivine structure, or LiMn₂O₄ or Li_{1.05}Mn_{1.9}Al_{0.05}O₄ having a spinel structure. In Examples 28 to 40, a similar effect is also achieved by using titanium composite oxides other than spinel type lithium titanate or niobium composite oxides as a material that absorbs and releases lithium at 0.4 V vs. Li/Li⁺ or higher for use as the negative electrode active material. Further, it is clear that a plurality of negative electrode active materials may be mixed. It is clear from Examples 41 to 43 that regarding the positive electrode active material, a similar effect can also be achieved by mixing a plurality of positive electrode active materials.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A nonaqueous electrolyte battery (10) comprising:
a positive electrode (5) including a positive electrode active material;
a negative electrode (3) including a negative electrode active material that absorbs and releases lithium at 0.4 V vs. Li/Li⁺ or higher; and
a nonaqueous electrolyte dissolved in a nonaqueous solvent including γ-butyrolactones substituted by a hydrocarbon substituent at an alpha position.

2. The nonaqueous electrolyte battery (10) according to claim 1, wherein the negative electrode active material contains a spinel type lithium titanate.

3. The nonaqueous electrolyte battery (10) according to claim 1, wherein the positive electrode active material includes a lithium-nickel-cobalt-manganese composite oxide.

4. The nonaqueous electrolyte battery (10) according to claim 1, wherein the positive electrode active material includes lithium iron phosphate.

5. The nonaqueous electrolyte battery (10) according to claim 1, wherein the nonaqueous electrolyte further includes at least one of propylene carbonate and ethylene carbonate.

6. The nonaqueous electrolyte battery (10) according to claim 1, wherein an amount of the γ-butyrolactones substituted by the hydrocarbon substituent at the alpha position in the nonaqueous solvent is 20% to 80% by weight.

7. The nonaqueous electrolyte battery (10) according to claim 1, wherein the γ-butyrolactones substituted by the hydrocarbon substituent at the alpha position is α-methyl-γ-butyrolactone.

8. The nonaqueous electrolyte battery (10) according to claim 1, further comprising: a container formed from a laminate film.

9. A battery pack (20) comprising the nonaqueous electrolyte battery according to claim 1, wherein the nonaqueous electrolyte batteries (10) are electrically connected in series or in parallel.
